# EUROPEAN PATENT SPECIFICATION

(11) **EP 0 329 412 B1**
(45) Date of publication and mention of the grant of the patent: **08.06.1994**
(21) Application number: 89301439.9
(22) Date of filing: 15.02.1989
(51) Int. Cl.: G11B 20/14, G11B 20/10, H03M 5/12

(54) **Reading and decoding recorded data at varying speeds using a magneto-resistive sensor**
Wiedergabe und Dekodierung aufgezeichneter Daten mit variabler Geschwindigkeit unter Verwendung eines magneto-resistiven Sensors
Lecture et décodage de données enregistrées utilisant un détecteur magnetorésistif

(30) Priority: 16.02.1988 GB 8803504
(43) Date of publication of application: 23.08.1989
(73) Proprietor: M.R. SENSORS LIMITED, St Mellons Cardiff CF3 0EF Wales (GB)
(72) Inventor: Collins, Alan John, Risca Gwent NP1 6RB Wales (GB); Selvaratnam, Cardiff CF3 4HF Wales (GB)
(74) Representative: Blatchford, William Michael

(56) References cited:
- FR-A- 2 143 920
- FR-A- 2 428 875
- US-A- 3 811 033
- US-A- 3 859 631
- IBM TECHNICAL DISCLOSURE BULLETIN. vol. 27, no. 11, April 85, NEW YORK US page 6661-6666; "Magnetic Stripe Reader Enhancement"
- IBM TECHNICAL DISCLOSURE BULLETIN. vol. 18, no. 5, October 75, NEW YORK US page1508 - 1509; F. J. Garofalo et al.: "Delta Distance Decoder"
- IBM TECHNICAL DISCLOSURE BULLETIN. vol. 20, no. 10, March 78, NEW YORK US page4124 - 4127; J. M. Beirne: "F/2F Data Separation and Decoding"

## Description

This invention relates to the reading and decoding of data from a recording medium, and is particularly applicable to reading and decoding data from a recording medium which is moved past a sensor at a variable speed.

It is well known to provide credit cards, identity cards or the like with a magnetic strip having information stored in it as a series of magnetic field variations which can be picked up by moving the strip across an inductive sensor coupled in a sensing circuit. Typically, the extraction of data involves deriving clock pulses and data pulses from the sensor signal using the sensing circuit hardware and then sampling the data whenever the clock pulses are low. It is also known to use a magneto-resistive sensor as an alternative to the inductive sensor.

IBM Technical Disclosure Bulletin, Vol. 18, No. 5 pages 1508, 1509 teaches a logic system for generating serial data from a magnetic stripe card at variable speed. Received delta data of F/2F input data is subjected to a comparison process in which the widths two adjacent pulses are compared, a logical "1" being outputted if the two pulse widths have a ratio within a predetermined range.

It is an object of this invention to provide a method and apparatus for reading and decoding data from the medium in a relatively simple and reliable manner.

According to a first aspect of this invention there is provided a method of retrieving information from a magnetic recording medium in which information is read from the medium by means of a sensor whereby the sensor is arranged to be subject to magnetic field variations representing a recorded signal containing the information as relative movement between the sensor and the medium occurs so that the sensor yields an electrical signal in the form of a stream of data pulses, and in which the data pulses are decoded to produce corresponding decoded data values by comparing the widths of successive data pulses, characterised in that the sensor has an electrical resistance which varies according to the magnetic field to which it is subjected and is operated substantially unbiased, in that it is arranged that the magnetic field variations are bidirectional so that the substantially unbiased sensor yields a signal in which the stream of data pulses has a repetition rate double that of the field variations, and in that decoding is performed by comparison of the widths of the successive data pulses with the width or widths of at least one reference data pulse read from the medium for which the decoded data value is known.

If relative movement is produced between the medium and the sensor and in such a manner that a rapid variation in the frequency of the stream of data pulses is likely (as would happen if a rapid acceleration or deceleration were to occur), it is preferable to select different reference pulses from the data pulses read from the medium and to use these successively for comparing with the pulses to be decoded. For example, the width of each pulse to be decoded may be compared with the width of the last occurring pulse of one or another known decoded value.

For simplicity of circuitry, it is preferable to read the information from the medium by means of a sensor operable to provide a time-varying electrical signal the amplitude of which is substantially constant as the speed of relative movement between the sensor and the medium, and thus the frequency of the stream of data pulses, varies. The sensor output may then be fed, after amplification if necessary, directly to a comparator with a fixed threshold. The constant amplitude of the received pulse stream for a series of magnetically stored pulses of equal width allows a square waveform of substantially constant mark-to-space ratio to be obtained at the output of the comparator.

The data is preferably encoded using two frequency phase coherent (F2F) recording with the data pulses of the pulse stream being associated with either first or second decoded data values, those pulses associated with the first value being narrower than those associated with the second. The first value may be the data bit '1', and the second the data bit '0'.

The actual pulse width associated with a data bit is a function of the characteristics of the head and medium, the recorded bit density and bit pattern, head-to-medium spacing, medium speed, and the amplifier and comparator used to process the head output. The head characteristic, head-to-medium spacing, amplifier and comparator can be optimised to a particular recording situation to enable decoding of data from the pulse widths associated with '1' and '0'; i.e. the difference in the pulse widths associated with '1's and '0's can be defined for a particular recording situation. In this way, circuitry for deriving a clock waveform from a self-clocking recorded signal can be dispensed with.

In one preferred embodiment an unbiased magnetoresistive sensor is used to read the pulse width associated with recorded data encoded on, for example, a magnetic strip on a swipe card using two frequency phase coherent recording. A substantially unbiased magnetoresistive sensor has a symmetrical characteristic about a 'zero' magnetic field and, if the recorded signal is bi-directional i.e. non-return to zero encoded, an effective doubling of frequency results. Due to this doubling of frequency only discrete pulse widths need to be measured in the preferred embodiment rather than counting consecutive 'high' and 'low' pulses which can be different.

The pulse widths can be measured using a gated fast clock with a counter or a set of counters, the counter or counters being of digital type, or, for low density recording, a software loop if a microprocessor is present. Other electronic techniques can also be employed to measure the pulse widths associated with the data. The frequency doubling produced with a bidirectional magnetic signal on the medium gives rise to a data signal in which a recorded '1' is represented by two pulses, whereas a '0' is represented by only one. This enables error checking at bit level by ensuring that the first pulse associated with a '1' is followed by a pulse of similar width.

The basic method of decoding may be achieved by comparing the received pulse width with a previously received pulse width for either a '1' or a '0'. If, when compared with a pulse width for a '1', the received pulse width is greater than the previously received pulse width, then the received pulse width is determined as being associated with a '0', providing there have been two consecutive pulses associated with a '1', otherwise it is determined to be associated with a '1'. If, when compared with the pulse width for a '0', the received pulse width is less than the previously received pulse width, the received pulse width is determined as representing the first associated with a '1', otherwise it is determined as being associated with '0'. Tolerances of the allowable difference between pulses associated with a '1' and '0' can be set for a particular magnetic recording system. Ideally the pulse widths associated with a '1' should be 50% of those associated with a '0'.

If a reference pulse width is employed for a '1' or a '0' in the comparison procedure, the reference pulse width may be the pulse width of the preceding '0' or '1' as described above, providing it is within existing margins set for the '0' and '1'. As an alternative it may be the average of all the preceding '0's or '1's. Other statistical methods may be employed to derive the reference pulse width for a '0' or '1' from the preceding pulse widths. The actual method employed to derive the reference pulse width may be selected to suit the characteristics (particularly variations in the velocity of the medium) of the reading system including the mechanics of the system. The minimum and maximum allowed variation in speed of decoding is largely dependent on the basic accuracy of measuring pulse widths. An increase in the speed of decoding may be achieved by effectively controlling the frequency of the fast clock such that if the speed of the recorded medium past the sensor increases, then the clock frequency increases. Thus the frequency of the fast clock can be controlled by feedback to result in constant resolution over the required speed range. If the clock frequency were not varied then a very large counter would be required to accommodate slow movement of the recorded medium past the sensor, i.e. to avoid counter overflow.

According a second aspect of the invention, there is provided apparatus for retrieving information from a magnetic recording medium, the apparatus comprising a sensor arranged in the apparatus such that when relative movement between the sensor and the medium occurs the sensor is subject to magnetic field variations representing a recorded signal containing the information and thereby yields a stream of data pulses, and a decoder coupled to the sensor and operable to produce decoded data values corresponding to the data pulses including means for measuring the widths of the data pulses, storage means for storing the pulse widths, and means operable to compare the widths of successive data pulses to be decoded, characterised in that the sensor has an electrical resistance the value of which varies according to the magnetic field to which it is subjected, in that the sensor is substantially unbiased and is so arranged in the apparatus that it is subject to bidirectional magnetic field variations so that the stream of data pulses has a repetition rate double that of the field variations, and in that the comparison means is arranged to compare the widths of the successive data pulses with the width or widths of at least one reference data pulse from the sensor for which the decoded data value is known.

The invention will now be described by way of example with reference to the drawings in which:-
Figure 1 is a diagram of an analogue input circuit for producing a digital signal using a magnetoresistive sensor;
Figure 2 is a graph showing the output characteristic of a magnetoresistive sensor;
Figures 3A to 3C are waveform diagrams of, respectively, data encoded on magnetic tape using two-frequency phase coherent recording (F2F), an analogue signal derived from a magnetoresistive head reading the tape in which the amplitude of the output pulses associated with '1's is approximately equal to that of the output pulses associated with '0's, and the digital signal produced by the circuit of Figure 2 when the signal of Figure 3A is bi-directional; and
Figure 4 is a block diagram of a decoding system for the digital signal of Figure 4.

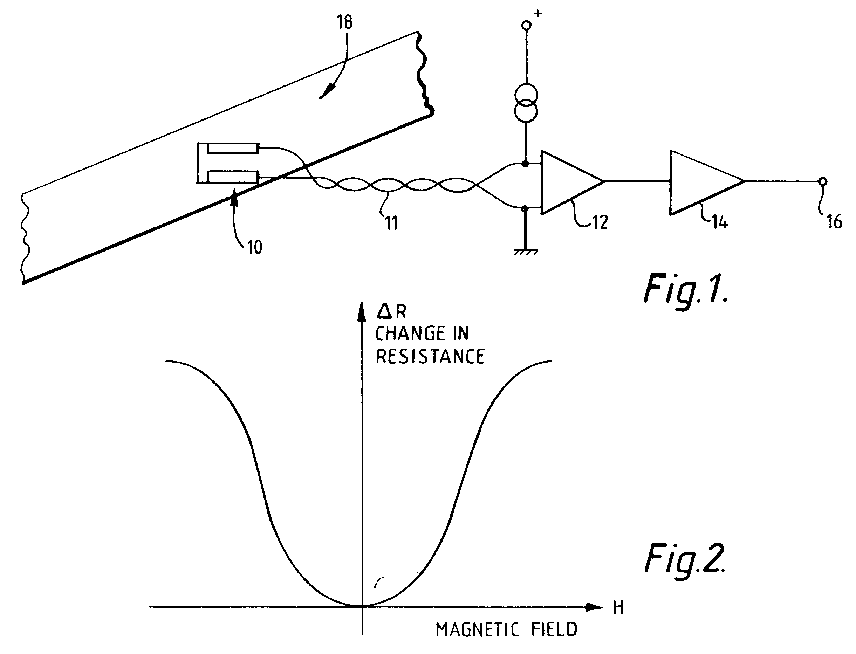

Referring to Figure 1, a card reader in accordance with the invention has an input stage comprising an unbiased magnetoresistive sensor 10, coupled by a twisted pair 11 of conductors to preamplifier 12. The output of the amplifier 12 is coupled to a comparator 14 having an output 16. When the magnetic layer 18 of a swipe card is passed over the magnetoresistive sensor 10, an electrical signal representative of coded data in the magnetic layer 18 is produced on conductors 11.

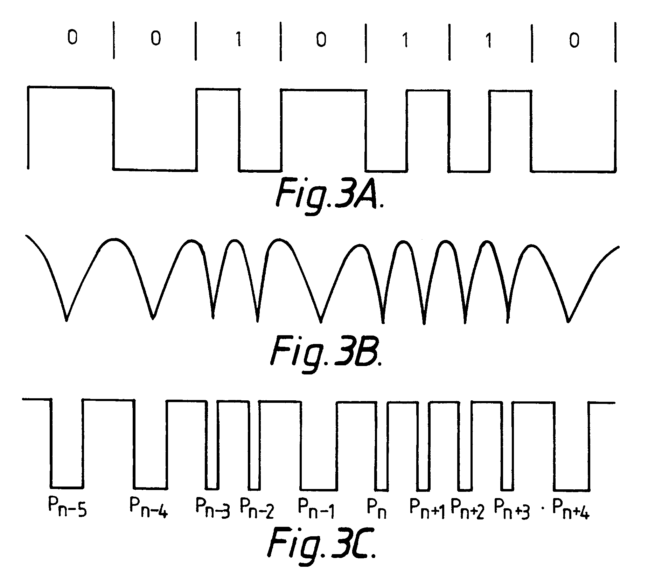

Referring to Figure 2, it will be seen that the magnetoresistive sensor 10 has a symmetrical output vs. magnetic field characteristic. This holds true if the sensor is unbiased. If the magnetisation of the magnetic layer is bidirectional, a doubling of the pulse repetition rate of the electrical signal with respect to the repetition rate of the magnetic field variations will result as the magnetic layer 18 passes the sensor 10. The doubling effect is shown in Figures 3A to 3C.

The waveform of Figure 3A is an example of a recorded signal with two frequency phase coherent (F2F) encoding, which is a method of encoding data on a recording medium allowing the derivation of a clock waveform from the recorded data. The medium may be a magnetic layer on a swipe card or the like which, it will be appreciated, may be passed through a card reader at any speed over a wide range of speeds, and with some acceleration or deceleration. When such a waveform, representing bidirectional magnetic field variations, has been read by the unbiased magnetoresistive sensor 10, the output of the sensor 10, after amplication in amplifier 12, may have a waveform of the appearance shown in Figure 3B, while passage through the comparator 14 results in the data pulse stream of Figure 3C. It will be seen from Figure 3C that the pulse width associated with a zero is greater than the width of the pulses (two) associated with a '1'. The ratio of the pulse widths associated with '1's and '0's is a function of previously defined parameters.

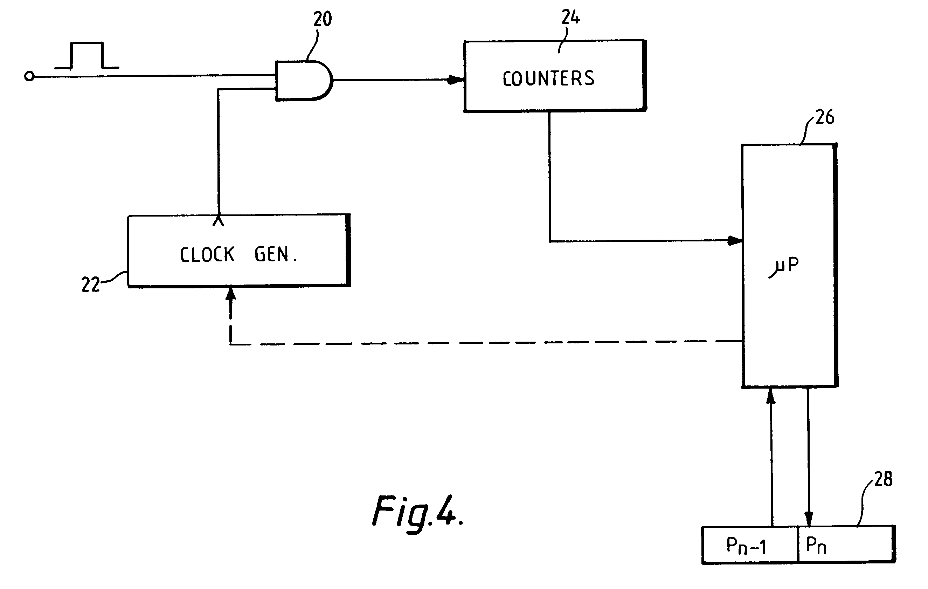

Referring now to Figure 4, the digital pulse stream from the comparator is fed to one input of an AND gate 20 having its other input coupled to a clock generator 22 arranged to feed to the AND gate 20 a fast clock waveform of a frequency considerably greater than the pulse repetition rate of the incoming data pulses. The resulting gated clock waveform is fed to a counter 24 having an output coupled to a microprocessor 26. In operation of the circuit of Figure 4, the width of each pulse of the waveform of Figure 3C is measured by counting the corresponding gated clock pulses in the counter 24. The resulting count is stored by the microprocessor 26 in an associated memory 28.

Evaluation of the pulses is performed by comparing in the microprocessor 26 the stored counts of different pulses. It will be understood that the decoding process may include storing the whole output obtained by passing a swipe card across the sensor before the comparison of pulse widths begins. Alternatively, storage and comparison may be performed on a real time basis.

In a first method of decoding, the microprocessor 26 stores in the memory and compares the count Pₙ₋ₐ for the last pulse representing a '0' and the count Pₙ for a pulse to be decoded. If Pₙ is less than Pₙ₋ₐ by a preset percentage, the pulse corresponding to Pₙ is decoded as '1' providing the next incoming pulse Pₙ₊₁ also has the characteristic of a '1'. When this occurs, the two pulses are decoded as a single data bit '1'. This provides a form of error checking. If Pₙ is equal to Pₙ₋ₐ within a fixed tolerance band, then the pulse is decoded as a '0'. Alternatively, the counts representing '1's can be used as reference counts, the microprocessor comparing the count Pₙ of the pulse to be decoded with the count of the last occurring '1'. This method is satisfactory provided that the incoming data does not include large numbers of '1's and '0's in succession, as appropriate, when an acceleration or deceleration of the magnetic strip could result in errors.

A second method involves instead the comparison of Pₙ with Pₙ₋₁ where Pₙ₋₁ is the width of the preceding pulse plus a fixed percentage in the case of a '0', or the total width of the two preceding pulses associated with a '1' plus a fixed percentage of the sum of the pulses.

Thirdly, a combination of the two methods can be used.

In Figure 3C it will be seen that the widths of pulses are measured in the process described above. It is, of course, equally possible to operate on the pulse spacings, and all references to a pulse width or widths in this specification are to be construed as including a pulse spacing or spacings.

Alternatively statistical methods may be employed in evaluating the pulse width of the reference '0' or '1' as described previously.

In each case the comparisons are performed with certain tolerances added to or subtracted from the reference count depending, for example, on the expected noise level or recording density (the higher the density the smaller the variation from bit to bit), the expected range of speed of the card in the reader, the accuracy of measurement of pulse width (i.e. the fast clock frequency), and the hysteresis of the comparator 14.

Typically the fast clock frequency is 100kHz. However, it is possible within the scope of the invention to vary the fast clock frequency for the reasons mentioned hereinabove. To this end, the microprocessor 26 may be programmed to generate an output signal dependent on the values of counts received from the counter 24 to vary the clock frequency. Thus, if the counts exceed a predetermined value (caused by slow movement of the card), the output signal from the microprocessor may be used to reduce the clock frequency. Alternatively, continuous feedback may be used, whereby the clock frequency is maintained substantially equal to a fixed multiple of the underlying pulse repetition rate of the incoming data, so as to maintain constant resolution in the pulse width measurement. In fact, the frequency of the clock could be introduced into the decoding algorithm in the microprocessor as a multiplying factor. This allows accurate measurement of pulse width over a wide range of pulse repetition rates.

In the above examples of the decoding, decoding is achieved in real time. However, it is possible to store all of the pulses associated with all the '1's and '0's encoded for example on a card, and to then decode to the system requirements. More complex statistical methods may then be applied to decode the data thus improving the reliability of the reading system. For example, in an insertion card reader in which the data may be read when the card is inserted and when it is withdrawn, post-processing of the pulse widths measured during insertion and when the card is removed may be used statistically to improve the reading reliability.

It will be appreciated that random logic and an arithmetic logic unit (ALU) may be used to perform the same functions as the microprocessor.

## Claims

1. A method of retrieving information from a magnetic recording medium (18) in which information is read from the medium by means of a sensor (10) whereby the sensor is arranged to be subject to magnetic field variations representing a recorded signal containing the information as relative movement between the sensor and the medium occurs so that the sensor yields an electrical signal in the form of a stream of data pulses, and in which the data pulses are decoded to produce corresponding decoded data values by comparing the widths of successive data pulses, characterised in that the sensor (10) has an electrical resistance which varies according to the magnetic field to which it is subjected and is operated substantially unbiased, in that it is arranged that the magnetic field variations are bidirectional so that the substantially unbiased sensor (10) yields a signal in which the stream of data pulses has a repetition rate double that of the field variations, and in that decoding is performed by comparison of the widths of the successive data pulses with the width or widths of at least one reference data pulse read from the medium (18) for which the decoded data value is known.

2. A method according to claim 1, characterised in that different reference pulses are selected from the data pulses read from the medium (18) and are successively used for comparing with the pulses to be decoded.

3. A method according to claim 1 or claim 2, characterised in that the electrical signal has an amplitude which is substantially constant as the speed of relative movement between the sensor (10) and the medium (18) varies.

4. A method according to any preceding claim, characterised in that the recorded signal is a bidirectional two frequency phase coherent encoded signal having high pulses and low pulses, the pulses having different widths being associated with different data values, and in that the decoding step comprises designating the pulses of the pulse stream obtained from the sensor (10) as narrow pulses or wide pulses, each pair of consecutive narrow pulses being allocated a single first decoded data value and each wide pulse being allocated a single second decoded data value.

5. A method according to any preceding claim, characterised in that the pulse widths of the pulse stream are measured by operating at least one counter (24) for the durations of the respective pulses.

6. A method according to claim 5, characterised in that the counter (24) is clocked at a rate which is automatically adjusted according to the repetition rate of the data pulses when read from the recording medium (18).

7. A method according to claim 5 or claim 6, characterised in that the counter (24) is implemented as a software loop executed by a microprocessor (26).

8. A method according to claim 4, characterised in that the decoding of a received data pulse of the data pulse stream includes determining the width of the pulse, comparing the determined width with the width of a reference data pulse associated with a known decoded data value, reading the decoded value of the reference pulse, and (a) if the decoded value associated with the reference pulse is the said first value and the width of the pulse to be decoded is greater than the width of the reference pulse by a predetermined margin, associating the pulse to be decoded with the said second value, otherwise associating it with the first value, or (b) if the decoded value associated with the reference pulse is the said second value and the width of the pulse to be decoded is less than the width of the reference pulse by a predetermined margin, associating the pulse to be decoded with the said first value, otherwise associating it with the said second value.

9. A method according to claim 4 or claim 8, characterised by maintaining an average of the widths of a plurality of pulses determined as being associated with a respective one of the said values, and comparing the width of a pulse to be decoded with the width represented by the said average.

10. A method according to claim 1, characterised in that the widths of the data pulses of the stream of data pulses are compared with the widths of the reference pulse or pulses in pairs, a decoded data value being assigned to each pair of pulses to be decoded only if the widths of the two pulses of the pair are both correspondingly related to the width or widths of a reference pulse or pulses.

11. Apparatus for retrieving information from a magnetic recording medium, the apparatus comprising a sensor (10) arranged in the apparatus such that when relative movement between the sensor and the medium occurs the sensor is subject to magnetic field variations representing a recorded signal containing the information and thereby yields a stream of data pulses, and a decoder (12, 14, 20, 22, 24, 26, 28) coupled to the sensor (10) and operable to produce decoded data values corresponding to the data pulses including means for measuring the widths of the data pulses, storage means for storing the pulse widths, and means operable to compare the widths of successive data pulses to be decoded, characterised in that the sensor (10) has an electrical resistance the value of which varies according to the magnetic field to which it is subjected, in that the sensor (10) is substantially unbiased and is so arranged in the apparatus that it is subject to bidirectional magnetic field variations so that the stream of data pulses has a repetition rate double that of the field variations, and in that the comparison means is arranged to compare the widths of the successive data pulses with the width or widths of at least one reference data pulse from the sensor (10) for which the decoded data value is known.

12. Apparatus according to claim 11, characterised by reference updating means for selecting from the data pulses from the sensor (10) different reference pulses for successive use by the comparison means.

13. Apparatus according to claim 11 or claim 12, characterised in that the sensor (10) is operable to provide a time-varying electrical signal the amplitude of which is substantially constant as the speed of relative movement between the sensor (10) and the medium (18) varies.

14. Apparatus according to any of claims 11 to 13, characterised in that the data pulses are associated with either first or second decoded data values, those pulses associated with the first value being narrower than those associated with the second, and in that the comparing means is arranged to compare the width of a pulse to be decoded with the width of a reference data pulse and (a) if the decoded value associated the reference pulse is the said first value and the width of the pulse to be decoded is greater than the width of the reference pulse by a predetermined margin, to associate the pulse to be decoded with the second value, otherwise to associate it with the first value, or (b) if the decoded value associated with the reference pulse is the said second value and the width of the pulse to be decoded is less that the width of the reference pulse by a predetermined margin, to associate the pulse to be decoded with the said first value, otherwise to associate it with the second value.

15. Apparatus according to any of claims 11 to 14, characterised in that the storage means (28) are arranged to store an average of the widths of data pulses from the pulse stream determined as being associated with a respective one of the said values, and in that the comparing means are operable to compare the width of a pulse to be decoded with the width represented by the said average.

16. Apparatus according to any of claims 11 to 15, characterised in that the measuring means comprise at least one counter (24).

17. Apparatus according to claim 16, characterised by a clock source (22) coupled to the counter or counters (24) and arranged to feed to the counter or counters a clock signal the frequency of which is automatically adjustable according to the repetition rate of data pulses when read from the recording medium (18).

18. Apparatus according to any of claims 11 to 17, characterised in that the measuring means, the storage means and the comparison means are all implemented by the combination of a microprocessor (26) and an associated memory (28).

19. Apparatus according to claim 18, characterised in that the sensor (10) is coupled in circuitry arranged such that the sensor (10) is substantially unbiased.

20. Apparatus according to claim 11, characterised in that the recorded signal is a bidirectional two frequency phase coherent encoded signal having high pulses and low pulses, the pulses having different widths being associated with different data values, and in that the apparatus includes means for designating the pulses of the pulse stream obtained from the sensor (10) as narrow pulses or wide pulses, and means for allocating to each pair of consecutive narrow pulses a single first decoded data value and to each wide pulse a single second decoded data value.

## Patentansprüche

1. Verfahren zur Gewinnung von Informationen von einem magnetischen Aufzeichnungsmittel (18) , in welchem Information gelesen wird von dem Medium mittels eines Sensors/Fühlers (10) , wobei der Sensor bei Relativbewegung zwischen dem Sensor und dem Medium magnetischen Feldänderungen ausgesetzt wird, welche ein aufgezeichnetes, die Information enthaltendes Signal repräsentieren, so daß der Sensor ein elektrisches Signal in Form eines Stromes von Daten-Pulsen liefert, und wobei die Daten-Pulse decodiert/ entschlüsselt werden in entsprechende decodierte Datenwerte durch Vergleich der Weiten aufeinanderfolgender Daten-Pulse, dadurch gekennzeichnet, daß der Sensor (10) einen elektrischen Widerstand hat, der entsprechend dem magnetischen Feld, dem er ausgesetzt ist, variiert, und daß er im wesenltlichen ohne Vorspannung betrieben wird, daß die Anordnung derart ist, daß die magnetischen Feldvariationen zweiseitig gerichtet (bidirektional) sind, so daß der im wesentlichen vorspannungslose Sensor (10) ein Signal liefert, in welchem der Strom von Daten-Pulsen eine Impulsfrequenz doppelt so groß wie die Feldvariationen liefert, und daß die Decodierung ausgeführt wird durch Vergleich der Weiten der aufeinanderfolgenden Daten-Pulse mit der Weite oder den Weiten wenigstens eines Referenz-Datenpulses, der von dem Medium (18) gelesen wurde oder dessen entschlüsselter Datenwert bekannt ist.

2. Verfahren nach Anspruch 1, dadurch gekennzeichnet, daß verschiedene Referenzpulse ausgewählt werden von den voll dem Medium (18) gelesenen Datenpulsen und nacheinander mit den zu decodierenden Pulsen verglichen werden.

3. Verfahren nach Anspruch 1 oder 2, dadurch gekennzeichnet, daß das elektrische Signal eine Amplitude hat, die bei Veränderungen der relativen Geschwindigkeit zwischen dem Sensor (10) und dem Medium (18) im wesentlichen konstant ist.

4. Verfahren nach einem der vorhergehenden Ansprüche, dadurch gekennzeichnet, daß das aufgezeichnete Signal ein bidirektionelles, zu zwei Frequenzen, phasenkohärent verschlüsseltes Signal mit hohen Pulsen und niederen Pulsen ist, wobei die Pulse unterschiedliche Weiten, entsprechend unterschiedlichen Datenwerten, haben, und daß die Decodierung umfaßt die Zuordnung der Pulse des vom Sensor (10) erhaltenen Stromes von Pulsen als enge Pulse oder weite Pulse, jedes Paar von engen Pulsen ist einem einzelnen ersten decodierten Datenwert zugeordnet und jeder weite Puls ist einem einzelnen zweiten decodierten Datenwert zugeordnet.

5. Verfahren nach einem der vorhergehenden Ansprüche, dadurch gekennzeichnet, daß die Pulsweiten des Pulsstromes gemessen, wird durch Betrieb wenigstens eines Zählers (24) während der Dauer der entsprechenden Pulse.

6. Verfahren nach Anspruch 5, dadurch gekennzeichnet, daß der Zähler (24) getaktet ist auf eine Rate/Frequenz, die automatische eingestellt ist, entsprechend der Wiederholungsrate/Frequenz der Datenpulse beim Lesen von dem Aufzeichnungsmedium (18)

7. Verfahren nach Anspruch 5 oder 6, dadurch gekennzeichnet, daß der Zähler eingerichtet ist als Software-Schleife eines Mikroprozessors (26).

8. Verfahren nach Anspruch 4, dadurch gekennzeichnet, daß die Decodierung eines erhaltenen Datenpulses des Datenpulsstromes einschließt die Bestimmung der Pulsweite, den Vergleich der bestimmten Weite mit der Weite eines Referenzdatenpulses, der mit einem bekannten decodierten Datenwert assoziiert ist, Lesen des decodierten Wertes des Referenzpulses und (a) wenn der mit dem Referenzpuls assoziierte decodierte Wert der besagte erste Wert ist und die Weite des zu decodierenden Pulses um eine vorbestimmte Grenze größer als die Weite des Referenzpulses ist, wird der zu decodierende Puls dem besagten zweiten Wert zugeordnet, andernfalls dem ersten Wert, oder (b) wenn der mit dem Referenzpuls assoziierte, decodierte Wert der besagte zweite Wert ist und die Weite des zu decodierenden Pulses um eine bestimmte Grenze kleiner ist als die Weite des Referenzpulses, wird der zu decodierende Puls dem ersten Wert zugeordnet, andernfalls wird er dem besagten zweiten Wert zugeordnet.

9. Verfahren nach Anspruch 4 oder Anspruch 8, gekennzeichnet durch Aufrechterhaltung einer durchschnittlichen Weite einer Vielzahl von Pulsen, die bestimmt ist als assoziiert mit einem der besagten Werte, und Vergleich der Weite eines zu decodierenden Pulses mit der durch den Durchschnitt repräsentierten Weite.

10. Verfahren nach Anspruch 1, dadurch gekennzeichnet, daß man die Weite der Pulse des Stromes von Datenpulsen vergleicht mit den Weiten der Referenzpulse oder Pulspaare, wobei ein decodierter Datenwert jedem zu decodierenden Pulspaare nur zugeordnet wird, wenn die Weite der zwei Pulse des Paares beide entsprechend in Relation stehen zu der Weite oder Weiten eines Referenzpulses oder Referenzpulspaares.

11. Apparat zur Gewinnung von Informationen von einem magnetischen Aufzeichnungsmedium, mit einem in dem Apparat derart angeordneten Sensor (10), daß bei Relativbewegung zwischen dem Sensor und dem Medium, der Sensor magnetischen Feldänderungen ausgesetzt ist, die ein aufgezeichnetes, die Information enthaltendes Signal repräsentieren und damit einen Strom von Datenpulsen liefert, und mit einem Decoder (Entschlüsseler) (12, 14, 20, 22, 24, 26, 28), der mit dem Sensor (10) verbunden und betätigbar ist, zur Lieferung decodierter Datenwerte, entsprechend den Datenpulsen, mit Mitteln zur Messung der Weite der Datenpulse, Speichermitteln zur Speicherung der Pulsweiten und Mitteln betätigbar zum Vergleich der Weiten der aufeinanderfolgenden, zu decodierenden Datenpulse, dadurch gekennzeichnet, daß der Sensor (10) einen elektrischen Widerstand hat, dessen Wert entsprechend dem magnetischen Feld, dem er ausgesetzt ist, variiert, daß der Sensor im wesentlichen nicht vorgespannt ist und so in dem Apparat angeordnet ist, daß er beidseitig gerichteten magnetischen Feldänderungen ausgesetzt ist, so daß der Strom der Datenpulse eine Folgefrequenz hat doppelt derjenigen der Feldvariationen, und daß die Vergleichsmittel angeordnet sind zum Vergleich der Weiten der aufeinanderfolgenden Datenpulse mit der Weite oder den Weiten wenigstens eines Referenzdatenpulses von dem Sensor (10), für den der decodierte Datenwert bekannt ist.

12. Apparat nach Anspruch 11, gekennzeichnet durch Mittel zur Aktualisierung der Referenzdaten zur Auswahl verschiedener Referenzpulse aus den Datenpulsen des Sensors (10) für die successive Verwendung durch die Vergleichsmittel.

13. Apparat nach Anspruch 11 oder 12, dadurch gekennzeichnet, daß der Sensor (10) betätigbar ist zur Lieferung eines zeitveränderlichen elektrischen Signals, dessen Amplitude im wesentlichen konstant ist, bei veränderlicher Relativgeschwindigkeit zwischen Sensor (10) und Medium (18).

14. Apparat nach einem der Ansprüche 11 bis 13, dadurch gekennzeichnet, daß die Datenpulse entweder ersten oder zweiten decodierten, Datenwerten zugeordnet sind, wobei mit dem ersten Wert zugeordnete Pulse enger sind, als mit dem zweiten Wert zugeordnete und daß die Vergleichmittel angeordnet sind zum Vergleich der Weite eines zu decodierenden Pulse mit der Weite eines Referenzdatenpulses und (a) wenn der decodierte, dem Referenzpuls zugeordnete Wert der besagte erste Wert ist und die Weite des zu decodierenden Pulses größer als die Weite des Referenzpulses uni eine vorbestimmte Grenze ist, wird der zu decodierende Puls dem zweiten Wert zugeordnet, im anderen Fall wird er dem ersten Wert zugeordnet, oder (b) wenn der dem Referenzkurs zugeordnete decodierte Wert der besagte zweite Wert ist und die Weite des zu decodierenden Pulses kleiner ist als die Weite des Referenzpulses um eine vorbestimmte Grenze, wird der zu decodierende Puls dem ersten Wert zugeordnet, anderenfalls den zweiten Wert zugeordnet.

15. Apparat, entsprechend einem der Ansprüche 11 bis 14, dadurch gekennzeichnet, daß die Speichermittel (28) vorgesehen sind zur Speicherung einer Durchschnittsweite von Datenpulsen aus dem Pulsstrom, der bestimmt ist als zugeordnet zu einem der besagten Werte, und daß die Vergleichsmittel betätigbar sind zum Vergleich der Weite eines zu decodierenden Impulses mit der von dem besagten Durchschnitt repräsentierten Weite.

16. Apparat nach einem der Ansprüche 11 bis 15, dadurch gekennzeichnet, daß die Meßmittel wenigstens einen Zähler (24) aufweisen.

17. Apparat nach Anspruch 16, gekennzeichnet durch eine Taktquelle bzw. einem Taktgeber (22), der verbunden ist mit dem Zähler oder den Zählern (24) und angeordnet zur Lieferung eines Taktsignals zu dem Zähler oder den Zählern, dessen Frequenz automatisch einstellbar ist entsprechend der Impulsrate der Datenpulse beim Lesen von dem Aufzeichnungsmedium (18).

18. Apparat gemäß einem der Ansprüche 11 bis 17, dadurch gekennzeichnet, daß die Meßmittel, die Speichermittel und die Vergleichsmittel dargestellt bzw. ausgebildet sind durch die Kombination eines Mikroprozessors (26) und eines damit verbundenen Speichers (28).

19. Apparat nach Anspruch (18) dadurch gekennzeichnet, daß der Sensor (10) verbunden ist mit einem Schaltkreis, der derart angeordnet ist, daß der Sensor (10) im wesentlichen keine Vorspannung aufweist.

20. Apparat nach Anspruch 11, dadurch gekennzeichnet, daß das aufgezeichnete Signal ein zweifach gerichtetes, zweifrequenzphasenkohärentes, verschlüsseltes Signal mit hohen Pulsen, und niederen Pulsen ist, daß die Pulse verschiedene Weiten haben, denen verschiedene Datenwerte zugeordnet sind, und daß der Apparat Mittel aufweist zur Zuordnung der Pulse des vom Sensor (10) erhaltenen Pulsstromes als enge Pulse oder weite Pulse und Mittel zur Zuordnung jedes Paares aufeinanderfolgender enger Pulse als einzelner erster decodierter Datenwert und jedes weitei, Pulses als einzelner zweiter decodierter Datenwert.

## Revendications

1. Un procédé de récupération d'informations d'un support d'enregistrement magnétique (18) dans lequel les informations sur le support sont lues au moyen d'un capteur (10), le capteur étant agencé pour être soumis à des variations de champ magnétique représentatives d'un signal enregistré contenant les informations lors d'un déplacement relatif entre le capteur et le support de sorte que le capteur émette un signal électrique en forme d'un train d'impulsions de données, et dans lequel les impulsions de données sont décodées afin de produire des valeurs correspondantes de données décodées en comparant les largeurs des impulsions de données successives caractérisé en ce que le capteur (10) présente une résistance électrique qui varie en fonction du champ magnétique auquel il est soumis, le capteur fonctionnant sensiblement sans polarisation, en ce qu'on prévoit que les variations du champ magnétique soient bidirectionnelle de sorte que le capteur (10) sensiblement sans polarisation émette un signal dans lequel le train d'impulsions de données présente un taux de répétition qui est double de celui des variations du champ et dans lequel le décodage est réalisé par comparaison des largeurs des impulsions de données successives avec la ou les largeur(s) d'au moins une impulsion de donnée de référence lue sur le support (18) pour lequel on connait la valeur décodée de donnée.

2. Un procédé selon la revendication 1, caractérisé en ce que l'on choisit différentes impulsions de références à partir dos impulsions de données lues sur le support (18), et qu'on les exploite successivement pour comparer avec les impulsions à décoder.

3. Un procédé selon la revendications 1 ou la revendication 2, caractérisé en ce que le signal électrique présente une amplitude qui est sensiblement constante lors de variations de la vitesse relative de déplacement du capteur (10) et du support (18).

4. Un procédé selon l'une quelconque des revendications précédentes, caractérisé en ce que le signal enregistré est un signal codé cohérent à phase bifréquentielle, bidirectionnel, présentant des impulsions de niveau logique haut et de niveau logique bas, les impulsions de différentes largeurs étant associées à des différentes valeurs de données et en ce que l'étape de décodage consiste à désigner des impulsions du train de données venant du le capteur (10) comme étant des impulsions étroites ou des impulsions larges, une première valeur unique de données décodées étant affectée à chaque paire d'impulsions étroites consécutives et une deuxième valeur unique de données décodées étant affectée à chaque impulsion large.

5. Un procédé selon l'une quelconque des revendications précédentes, caractérisé en ce que les impulsions larges du train d'impulsions sont mesurées grâce à la mise en oeuvre d'au moins un compteur (24) pendant les durées des diverses impulsions.

6. Un procédé selon la revendication 5, caractérisé en ce que la compteur 24 est cadencé à un rythme qui est réglé automatiquement en fonction du taux ou de la fréquence de répétition des impulsions de données lues sur le support d'enregistrement (18).

7. Un procédé selon la revendication 5 ou 6, caractérisé en ce que le compteur (24) est réalisé au moyen d'une boucle d'un logiciel exécuté par un micro-processeur (26).

8. Un procédé selon la revendication 4, caractérisé en ce que le décodage d'une impulsion de données reçue du train d'impulsion de données comporte la détermination de la largeur de l'impulsion, la comparaison de la largeur déterminée avec la largeur d'une impulsion de données de référence associée à une valeur connue de donnée décodée, la lecture de la valeur décodée de l'impulsion de référence, et (a) si la valeur décodée associée a l'impulsion de référence est ladite première valeur et la largeur de l'impulsion à décoder est supérieure à la largeur de l'impulsion de référence d'une marge prédéterminée, l'association de l'impulsion à décoder à ladite deuxième valeur ou dans le cas contraire, son association à la première valeur, ou (b) si la valeur décodée associée à l'impulsion de référence est ladite deuxième valeur et la largeur de l'impulsion à décoder est inférieure à la largeur de l'impulsion de référence d'une marge prédéterminée, l'association de l'impulsion à décoder à ladite première valeur, ou, dans le cas contraire, son association à ladite deuxième valeur.

9. Un procédé selon la revendication 4 ou 8, caractérisé par le stockage de la valeur moyenne des largeurs d'une pluralité d'impulsions pour lesquelles on a testé qu'elles sont associées à chacune desdites valeurs, et la comparaison de la largeur d'une impulsion à décoder avec la largeur représentée par ladite moyenne.

10. Un procédé selon la revendication 1, caractérisé en ce que les largeurs des impulsions de données du train d'impulsions de données sont comparées aux largeurs de l'impulsion ou dos impulsions de référence par paires, une valeur de donnée décodée étant affectée à chaque paire d'impulsions à décoder au seul cas où les largeurs des deux impulsions de la paire ont toutes les deux une relation de correspondance avec la largeur ou les largeur(s) d'une ou des impulsion(s) de référence.

11. Dispositif de récupération d'informations d'un support d'enregistrement magnétique, le dispositif comprenant un capteur (10) agencé dans le dispositif de sorte que, lors d'un déplacement relatif entre le capteur et le Support, le capteur soit soumis à des variations du champ magnétique représentatives d'un signal enregistré contenant les informations en émettant en conséquence un train d'impulsions de données, et un décodeur (12, 14, 20, 22, 24, 26, 28) couplé au capteur (10) et susceptible de produire des valeurs de données décodées en correspondance aux impulsions de données et comportant des moyens permettant de mesurer les largeurs des impulsions de données, des moyens de stockage pour mettre en mémoire/stocker les largeurs des impulsions, ainsi que des moyens susceptibles de comparer les largeurs des impulsions successives de données à décoder, caractérisé en ce que le capteur (10) Présente une résistance électrique dont la valeur varie en fonction du champ magnétique auquel il est soumis, en ce que le capteur (10) est sensiblement sans polarisation en étant agencé dans le dispositif de manière qu'il soit soumis à des variations bidirectionnelles du champ magnétique de sorte que le train d'impulsions de données présente un taux de répétition qui est deux fois celui des variations de champ, et en ce que les moyens de comparaison sont agencés afin de comparer les largeurs des impulsions de données successives avec la ou les largeur(s) d'au moins une impulsion de données de référence fournie par le capteur (10) pour lequel la valeur de données décodée est connue.

12. Dispositif selon la revendication 11, caractérisé par des moyens de mise à jour de valeur de référence pour choisir, à partir des impulsions de données du capteur (10), diverses impulsions de référence qui seront successivement employées par les moyens de comparaison.

13. Dispositif selon la revendication 11 ou la revendication 12, caractérisé en ce que le capteur (10) est agencé afin d'émettre un signal électrique à variation temporelle et dont l'amplitude est sensiblement constant lors des variations de la vitesse relative de déplacement du capteur (10) et du support (18).

14. Dispositif selon l'une quelconque des revendications 11 à 13, caractérisé en ce que les impulsions de données sont associées soit à des premières, soit à des deuxièmes valeurs de données décodées, les impulsions qui sont associées à la première valeur étant plus étroites que celles associées à la deuxième valeur, et en ce que les moyens de comparaison sont agencés afin de comparer la largeur d'une impulsion à décoder avec la largeur d'une impulsion de donnée de référence et (a) si la valeur décodée associée à l'impulsion de référence est ladite première valeur et la largeur de l'impulsion à décoder est supérieure à la largeur de l'impulsion de référence d'une marge prédéterminée, d'associer l'impulsion à décoder à ladite deuxième valeur ou, dans le cas contraire, de l'associer à la première valeur, ou (b) si la valeur décodée associée à l'impulsion de référence est ladite deuxième valeur et la largeur de l'impulsion à décoder est inférieure à la largeur de l'impulsion de référence d'une marge prédéterminée, d'associer l'impulsion à décoder à ladite première valeur, et, dans le cas contraire, de l'associer à ladite deuxième valeur.

15. Dispositif selon l'une quelconque des revendications 11 à 14, caractérisé en ce que les moyens de stockage (28) sont agencés afin de mémoriser une valeur moyenne des largeurs d'impulsions de données obtenues du train de données, pour lesquelles on a déterminé qu'elles sont associées chacune à une valeur respective desdites valeurs, et en ce qu'on fait fonctionner les moyens de comparaison afin de comparer la largeur d'une impulsion à décoder avec la largeur représentée par ladite valeur moyenne.

16. Dispositif selon l'une quelconque des revendications 11 à 15, caractérisé en ce que les moyens de mesure comprennent au moins un compteur (24).

17. Dispositif selon la revendication 16, caractérisé par une source d'un signal d'horloge (22) couplée au compteur ou aux compteurs (24) et destinée à fournir un signal d'horloge au(x) compteur(s) dont la fréquence peut être réglée automatiquement en fonction du taux de répétition des impulsions de données lors de la lecture du support de l'enregistrement (18).

18. Dispositif selon l'une quelconque des revendications 11 à 17, caractérisé en ce que les moyens de mesure, les moyens de stockage et les moyens de comparaison opèrent tous grâce au fonctionnement combiné d'un micro-processeur (26) et d'une mémoire associée (28).

19. Dispositif selon la revendication 18, caractérisé en ce que le capteur (10) est couplé dans un circuit agencé de façon telle que le capteur (10) soit sensiblement sans polarisation.

20. Dispositif selon la revendication 11, caractérisé en ce que le signal enregistré est un signal codé cohérent à phase bifréquentielle, bidirectionnel, présentant des impulsions de niveau logique haut et des impulsions de niveau logique bas, les impulsions de différentes largeurs étant associées aux diverses valeurs de données et en ce que le dispositif comporte des moyens permettant d'identifier des impulsions du train d'impulsions fourni par le capteur (10) comme étant des impulsions étroites ou des impulsions larges, ainsi que des moyens fonctionnant de sorte qu'une première valeur unique de données décodées soit affectée à chaque paire d'impulsions étroites consécutives et une deuxième valeur unique de données décodées soit affectée à chaque impulsion large.
